# FASCICULE DE BREVET EUROPEEN

(11) **EP 4 055 485 B1**
(45) Date de publication et mention de la délivrance du brevet: **08.01.2025**
(21) Numéro de dépôt: 20807829.5
(22) Date de dépôt: 27.10.2020
(51) Int. Cl.: G06F 12/0804, G06F 12/0868

(54) **PROCÉDÉ POUR EXÉCUTER UNE TRANSACTION**
VERFAHREN ZUM AUSFÜHREN EINER TRANSAKTION
METHOD FOR EXECUTING A TRANSACTION

(30) Priorité: 04.11.2019 FR 1912338
(43) Date de publication de la demande: 14.09.2022
(73) Titulaire: Idemia Identity & Security France, 92400 Courbevoie (FR)
(72) Inventeur: DEL GIUDICE, Lauren, Marjorie, 92400 COURBEVOIE (FR); DUCLOS, Rémi, Louis, Marie, 92400 COURBEVOIE (FR); CUZZOLIN, Aurélien, 92400 COURBEVOIE (FR)
(74) Mandataire: Idemia
(86) Numéro de dépôt international: PCT/FR2020/051936
(87) Numéro de publication internationale: WO 2021/089928

(56) Documents cités:
- EP-A2- 1 286 269
- WO-A1-2016/023236
- WO-A2-2019/207285
- FR-A1- 2 988 878
- US-A1- 2004 123 040
- US-A1- 2019 042 333
- US-A1- 2019 129 716

## Description

L'invention concerne le domaine de la mémoire informatique, en particulier de la mémoire cache. L'invention vise notamment un procédé d'écriture de données dans la mémoire cache d'un processeur (ou unité centrale de traitement, UCT, en anglais « central processing unit, CPU ») d'un ordinateur.

La mémoire cache (ou simplement « cache ») est utilisée pour enregistrer temporairement des copies de données provenant d'une mémoire persistante (ou mémoire externe), i.e. une mémoire non volatile, par exemple une mémoire flash. Cela permet de diminuer significativement le temps d'accès pour une lecture ultérieure de ces données par le processeur. Les données sont transférées entre la mémoire persistante et le cache en blocs de taille fixe appelés « lignes de cache » ou « blocs de cache ».

Lorsque le processeur veut lire des données depuis une zone de la mémoire persistante, ou écrire des données dans une zone de la mémoire persistante, il est vérifié si le cache contient ces données. Si tel est le cas, ces données sont retransmises au processeur - on parle de « succès de cache » (ou « cache hit » en anglais). En revanche, si le cache ne contient pas les données, celles-ci sont demandées à la mémoire persistante - on parle de « défaut de cache » (ou « cache miss » en anglais). Les données sont alors copiées de la mémoire persistante vers des lignes de cache disponibles, puis transmises depuis le cache vers le processeur.

Lorsque le cache est complètement rempli, il est nécessaire de « purger » (en anglais « flush ») des lignes de cache vers la mémoire persistante avant d'allouer de nouvelles lignes de cache pour l'écriture de données. Purger une ligne de cache, lorsque cette ligne de cache a été modifiée, signifie que le contenu de cette ligne est copié vers la mémoire persistante (i.e. synchronisé avec la mémoire persistante), puis supprimé. Il est alors possible d'écrire de nouvelles données dans la ligne de cache ainsi purgée. WO 2019/207285 A2 divulgue l'exécution d'une transaction en utilisant différents états associés à une ligne de cache afin de filtrer les lignes de cache correspondant à une transaction précédente.

Il est généralement nécessaire d'écrire des données dans la mémoire persistante, et donc copier des lignes correspondantes depuis le cache, lors de l'exécution d'une transaction. Il est rappelé ici qu'une transaction correspond à une suite d'opérations, ou d'instructions, qui possède certaines propriétés. En particulier, une transaction est atomique, c'est-à-dire que la suite d'opérations est indivisible : la transaction est soit validée (en anglais « commit »), soit annulée (en anglais « abort »). Lorsque la transaction est annulée, l'ensemble des données traitées reviennent à leur état initial (mécanisme de retour en arrière, ou « rollback » en anglais). Dans le domaine des télécommunications, le chargement d'un profil client sur une carte eSIM (de l'anglais « Embedded SIM », ou en français SIM embarquée) comprend généralement une pluralité de transactions, qui peuvent se situer soit au niveau système, soit au niveau applicatif. D'autres applications peuvent être envisagées, comme la réalisation d'un paiement à partir d'un élément sécurisé (ou « secure élément » en anglais).

Chaque instruction peut nécessiter de copier des données dans des lignes de cache, certaines de ces lignes pouvant avoir été déjà modifiées au cours d'opérations précédentes. Ne sont considérées ici que les transactions qui nécessitent de modifier un nombre de lignes inférieur ou égal à N, N étant le nombre maximal de lignes de cache physiquement disponibles dans le cache. Par ailleurs, il est considéré ici que les transactions peuvent être initialisées, validées, annulées ou suspendues par programmation.

Dans les mécanismes classiques, toutes les lignes de cache sont purgées à l'initialisation d'une transaction, avant d'exécuter la première instruction. Ainsi, si la transaction nécessite de modifier au plus N lignes, il n'y a pas de risque que le cache soit plein et, sauf erreur, la transaction peut être achevée normalement.

Purger les lignes de cache dans leur intégralité et de manière systématique est très coûteux en termes de temps et de consommation de courant, et provoque une usure prématurée et excessive de la mémoire persistante.

Il y a donc un besoin d'une méthode d'exécution d'une transaction par un processeur qui ne souffre pas des problèmes susmentionnés.

### Exposé de l'invention

Il est ainsi proposé un procédé mis en oeuvre par un processeur pour exécuter une transaction, ladite transaction comprenant une séquence d'instructions, le processeur étant associé à une mémoire persistante et à une mémoire cache, dans lequel la mémoire cache comprend une pluralité de lignes de cache et chaque ligne de cache est associée à un état respectif parmi un ensemble d'états prédéfinis, le procédé comprenant, pour au moins une instruction de la séquence d'instructions nécessitant de copier des données vers au moins une ligne de cache associée à un état autre qu'un état représentatif d'une allocation à des données de ladite transaction :
a. si au moins une ligne de cache est associée à un état permettant de copier directement des données dans ladite au moins une ligne de cache :
   i. copier des données correspondant à ladite instruction dans ladite au moins une ligne de cache ; et
   ii. associer ladite au moins une ligne de cache à un état représentatif d'une allocation à des données de ladite transaction ;
b. si aucune ligne de cache n'est associée à un état permettant de copier directement des données :
   i. pour chaque ligne de cache parmi un ensemble de lignes de cache associées à un état représentatif d'une allocation à des données externes à ladite transaction, copier un contenu respectif de ladite ligne de cache vers la mémoire persistante, et supprimer ledit contenu de ladite ligne de cache ;
   ii. associer les lignes de cache dont les contenus respectifs ont été supprimés à un état indiquant qu'un contenu desdites lignes n'a pas été modifié ;
   iii. copier des données correspondant à ladite instruction dans au moins une ligne de cache parmi les lignes de cache dont les contenus respectifs ont été supprimés ; et
   iv. associer ladite au moins une ligne de cache à un état représentatif d'une allocation à des données de ladite transaction.

Par « instruction », on entend un ensemble d'instructions qui doit être effectué de manière atomique, c'est-à-dire validé ou annulé. Les instructions considérées dans le cadre de la présente invention sont des instructions nécessitant une écriture de données dans une ou plusieurs lignes de cache - bien entendu, la transaction considérée peut aussi comprendre des instructions ne nécessitant pas une telle écriture de données. En particulier, le procédé ci-dessus s'applique à des instructions nécessitant d'écrire des données dans une ou plusieurs lignes de cache dans lesquelles des données correspondant à la transaction considérée n'ont pas encore été écrites. Bien entendu, la transaction peut aussi comprendre des instructions qui nécessitent de modifier le contenu de lignes dans lesquelles des données de transaction ont déjà été écrites : pour ces instructions, le contenu de ces lignes est simplement modifié avec de nouvelles données.

Selon la présente invention, les lignes de cache sont associées à des états, qui indiquent s'il est possible ou non d'écrire des données dans ces lignes de cache. Plutôt que de purger le cache à l'initialisation d'une transaction, il est proposé de ne purger que certaines lignes de cache, uniquement lorsque cela est nécessaire, c'est-à-dire quand il ne reste aucune ligne de cache dans laquelle des données peuvent être écrites (ou « copiées »). Pour certaines transactions, aucune purge n'est ainsi nécessaire. La consommation d'énergie est réduite, et les composants (notamment la mémoire persistante) sont moins soumis à l'usure. Dans le cadre d'une opération impliquant un grand nombre de transactions, le temps d'exécution de cette opération s'en trouve significativement réduite.

Les états possibles pour une ligne de cache peuvent notamment comprendre :
- un état représentatif d'une allocation à des données de ladite transaction : cet état indique que le contenu de la ligne de cache a été modifié dans le cadre de la transaction considérée ;
- un état représentatif d'une allocation à des données externes à ladite transaction : cet état indique que le contenu de la ligne de cache a été modifié, mais avec des données qui ne correspondent pas à une instruction de la transaction considérée ; et
- un état indiquant qu'un contenu desdites lignes n'a pas été modifié : cet état indique que les données ont été synchronisées avec la mémoire persistante (lecture simple).

Lorsqu'il n'y a pas assez de ligne de cache disponible pour écrire des données correspondant à une instruction, une purge est effectuée sur un ensemble de lignes parmi les lignes dont le contenu a été modifié avec des données externes à la transaction.

Dans un ou plusieurs modes de réalisation, seulement une partie de ces lignes sont purgées. Autrement dit, ledit ensemble comprend un nombre de lignes strictement inférieur au nombre total de lignes dont le contenu a été modifié avec des données externes.

Alternativement, ledit ensemble comprend toutes les lignes de cache associées à un état représentatif d'une allocation à des données externes à ladite transaction. Autrement dit, toutes les lignes dont le contenu a été modifié avec des données externes sont purgées.

Dans un ou plusieurs modes de réalisation, des contenus respectifs des lignes de cache associées à l'état représentatif d'une allocation à des données de ladite transaction ne peuvent pas être supprimés pendant l'exécution de ladite transaction.

Les lignes de cache dont le contenu a été modifié avec des données de transaction sont ainsi verrouillées jusqu'à la fin de la transaction (validation ou annulation), ou jusqu'à une coupure d'alimentation le cas échéant. Leur contenu peut être modifié, mais ne peut pas être supprimé pendant l'exécution de la transaction.

Dans un ou plusieurs modes de réalisation, le procédé comprend en outre :
- recevoir une commande d'initialisation de la transaction ;
- en réponse à la réception de la commande d'initialisation, conserver un contenu courant de la mémoire cache ; et
- exécuter une première instruction de la séquence d'instructions selon des étapes précédentes, l'exécution de la première instruction comprenant une modification du contenu courant de la mémoire cache à partir de données correspondant à la première instruction.

La commande d'initialisation de la transaction peut être typiquement une instruction lue dans la mémoire persistante du processeur.

Par « contenu de la mémoire cache », il est entendu l'ensemble des contenus des lignes de cache de la mémoire cache. Par « contenu courant de la mémoire cache », il est entendu le contenu de la mémoire cache à l'initialisation de la transaction. A la réception de la commande d'initialisation ou de validation, le cache n'est pas purgé, contrairement aux méthodes classiques de l'art antérieur. Ainsi, lors de la première instruction nécessitant une écriture de données, ce contenu courant est modifié (contrairement aux méthodes classiques où la première instruction comprend une écriture dans des lignes dont le contenu a été supprimé à l'initialisation).

Dans un ou plusieurs modes de réalisation, le procédé peut en outre comprendre :
- recevoir une information indiquant si la commande d'initialisation reçue correspond à une transaction sans annulation possible ou à une transaction avec annulation possible.

Les états qui permettent une écriture directe de données peuvent être différents selon que la transaction peut ou non être annulée. Une détermination du type de transaction à effectuer (avec ou sans annulation possible) permet avantageusement de déterminer quels états permettent une écriture directe de données.

Lorsque la commande d'initialisation reçue correspond à une transaction sans annulation possible, selon un mode de réalisation, les états permettant de copier directement des données peuvent être :
- l'état indiquant qu'un contenu de la ligne de cache n'a pas été modifié ;
- l'état représentatif d'une allocation à des données externes à ladite transaction ; et
- un état indiquant qu'aucune donnée n'a été copiée dans la ligne de cache.

Dans ce cas, des données de transaction peuvent être directement copiées dans des lignes de cache dont le contenu a été modifié avec des données externes à la transaction. Dans un ou plusieurs modes de réalisation, ces états sont les seuls permettant de copier directement des données.

Dans un ou plusieurs modes de réalisation, lorsque la commande d'initialisation reçue correspond à une transaction sans annulation possible, le procédé peut en outre comprendre :
- recevoir une instruction de validation de ladite transaction ;
- en réponse à la réception de l'instruction de validation de ladite transaction, modifier les états des lignes de cache associées à l'état représentatif d'une allocation à des données de ladite transaction, et les associer à l'état représentatif d'une allocation à des données externes à ladite transaction.

Les données qui ont été modifiées dans le cadre de la transaction sont, à la validation de cette transaction, associées à un état indiquant qu'elles ont été modifiées avec des données externes. Lors de l'exécution d'une transaction ultérieure, ces lignes pourront être purgées s'il n'y a pas suffisamment de lignes disponibles pour écrire directement des données dedans.

Alternativement, la commande d'initialisation reçue peut correspondre à une transaction avec annulation possible. Dans ce cas, selon un mode de réalisation, les états permettant de copier directement des données peuvent être :
- l'état indiquant qu'un contenu de la ligne de cache n'a pas été modifié ; et
- un état indiquant qu'aucune donnée n'a été copiée dans la ligne de cache.

Dans un ou plusieurs modes de réalisation, ces états sont les seuls permettant de copier directement des données.

Un état indiquant qu'aucune donnée n'a été copiée dans la ligne de cache correspond à une ligne « vide ».

Selon cette alternative, il n'est pas possible de copier directement des données dans une ligne de cache associée à un état représentatif d'une allocation à des données externes à ladite transaction. Ainsi, s'il n'y a pas assez de lignes de cache disponible pour écrire des données dedans, ce sont ces lignes de cache qui sont purgées, partiellement ou en totalité, pour pouvoir ensuite écrire des données dans des lignes purgées.

Dans un ou plusieurs modes de réalisation, lorsque la commande d'initialisation reçue correspond à une transaction avec annulation possible, le procédé peut en outre comprendre :
- recevoir une instruction de validation de ladite transaction ;
- en réponse à la réception de l'instruction de validation de ladite transaction, modifier les états des lignes de cache associées à l'état représentatif d'une allocation à des données de ladite transaction, et les associer à l'état représentatif d'une allocation à des données externes à ladite transaction.

Alternativement, le procédé peut comprendre :
- recevoir une instruction d'annulation de ladite transaction ;
- en réponse à la réception de l'instruction d'annulation de ladite transaction, supprimer des contenus respectifs des lignes de cache associées à l'état représentatif d'une allocation à des données de ladite transaction, et associer les lignes de cache dont les contenus respectifs ont été supprimés à l'état indiquant qu'aucune donnée n'a été copiée dans la ligne de cache.

Le procédé peut alors en outre comprendre :
- en réponse à la réception de l'instruction d'annulation de ladite transaction, conserver des contenus respectifs des lignes de cache associées à l'état représentatif d'une allocation à des données externes à ladite transaction.

Selon ce mode de réalisation, les lignes de cache ayant été modifiées par des données externes à la transaction ne sont pas purgées à la fin de la transaction.

Selon un autre aspect, il est proposé un produit programme informatique comportant des instructions pour la mise en oeuvre de chacune des étapes du procédé précédent, lorsque ce programme est exécuté par un processeur.

Selon un autre aspect de l'invention, il est proposé un support d'enregistrement non transitoire, lisible par un ordinateur, sur lequel est enregistré un tel programme.

Selon un autre aspect, il est proposé un dispositif pour exécuter une transaction, ladite transaction comprenant une séquence d'instructions, le dispositif étant associé à une mémoire persistante et à une mémoire cache, dans lequel la mémoire cache comprend une pluralité de lignes de cache et chaque ligne de cache est associée à un état respectif parmi un ensemble d'états prédéfinis, le dispositif comprenant un circuit configuré pour :
- pour au moins une instruction de la séquence d'instructions nécessitant de copier des données vers au moins une ligne de cache associée à un état autre qu'un état représentatif d'une allocation à des données de ladite transaction :
   a. si au moins une ligne de cache est associée à un état permettant de copier directement des données dans ladite au moins une ligne de cache :
      i. copier des données correspondant à ladite instruction dans ladite au moins une ligne de cache ; et
      ii. associer ladite au moins une ligne de cache à un état représentatif d'une allocation à des données de ladite transaction ;
   b. si aucune ligne de cache n'est associée à un état permettant de copier directement des données :
      i. pour chaque ligne de cache parmi un ensemble de lignes de cache associées à un état représentatif d'une allocation à des données externes à ladite transaction, copier un contenu respectif de ladite ligne de cache vers la mémoire persistante, et supprimer ledit contenu de ladite ligne de cache ;
      ii. associer les lignes de cache dont les contenus respectifs ont été supprimés à un état indiquant qu'un contenu desdites lignes n'a pas été modifié ;
      iii. copier des données correspondant à ladite instruction dans au moins une ligne de cache parmi les lignes de cache dont les contenus respectifs ont été supprimés ; et
      iv. associer ladite au moins une ligne de cache à un état représentatif d'une allocation à des données de ladite transaction.

### Brève description des dessins

D'autres caractéristiques, détails et avantages de l'invention apparaîtront à la lecture de la description détaillée ci-après et à l'analyse des dessins annexés, dans lesquels :
Fig. 1

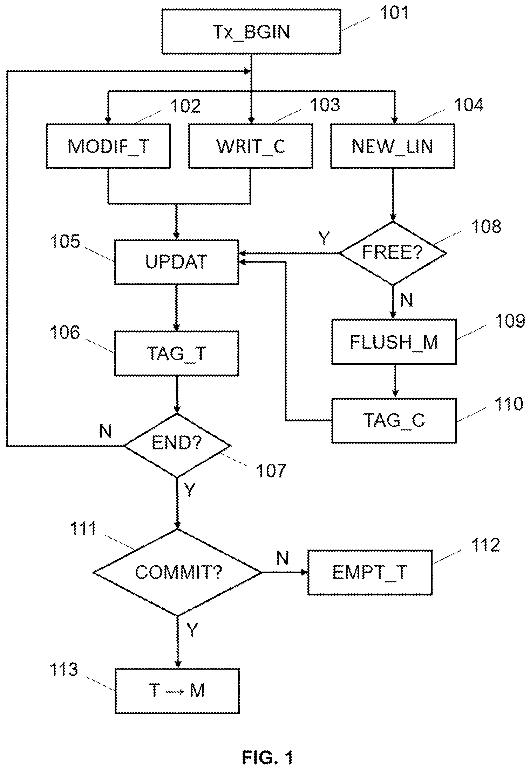

   La Figure 1 [Fig. 1] est un exemple d'ordinogramme d'un procédé pour exécuter une transaction, selon un premier mode de réalisation de l'invention ;
Fig. 2

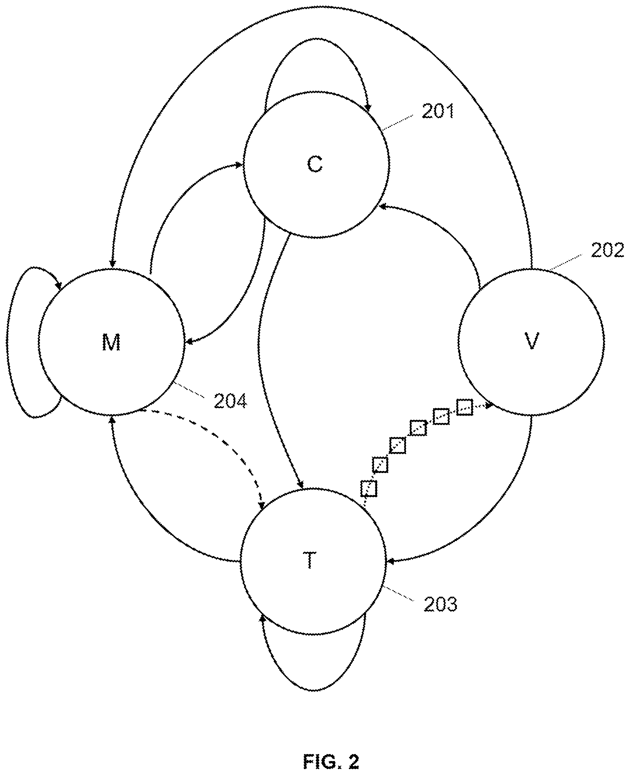

   La Figure 2 [Fig. 2] représente des transitions possibles pour les états associés à des lignes de cache, selon plusieurs modes de réalisation de l'invention ;
Fig. 3

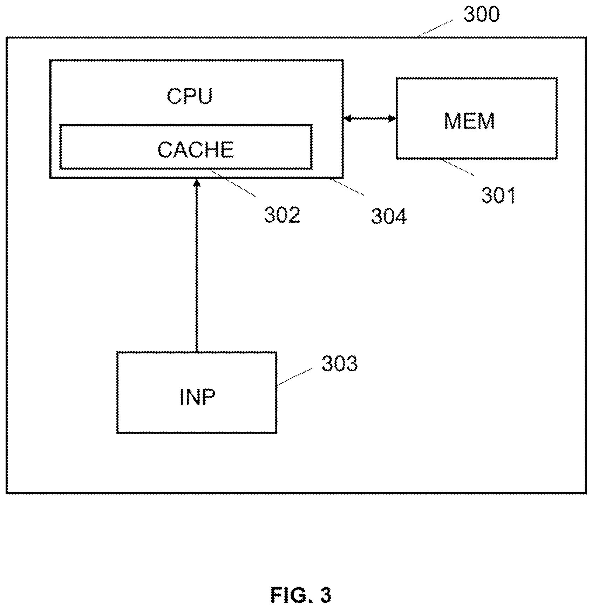

   La Figure 3 [Fig. 3] représente un dispositif pour exécuter une transaction selon un mode de réalisation de l'invention.

### Description des modes de réalisation

La figure 1 est un exemple d'ordinogramme d'un procédé pour exécuter une transaction, selon un premier mode de réalisation de l'invention.

A l'étape 101, une commande d'initialisation d'une transaction est reçue. Cette transaction correspond à une série d'instructions (ou « opérations »). Dans le cadre de la présente invention, ne sont considérées que les instructions comprenant une écriture de données dans une ou plusieurs lignes de cache de la mémoire cache (même si la transaction peut inclure d'autres instructions ne nécessitant pas d'écrire des données dans le cache).

En réponse à la réception de la commande d'initialisation, une première instruction de la série d'instructions est alors exécutée. Il est à noter que, à la réception de la commande d'initialisation, le cache n'est pas purgé, contrairement aux méthodes classiques de l'art antérieur.

Selon la présente invention, il est proposé d'associer à une ligne de cache un état appartenant à un ensemble d'états, de préférence prédéfinis. Selon des modes de réalisation, l'ensemble d'états comprend au moins trois états définis de la manière suivante :
- un état T, représentatif d'une allocation de la ligne de cache à des données de la transaction en cours. En d'autres termes, une ligne de cache associée à un état T est une ligne de cache qui a été modifiée lors de l'exécution de la transaction en cours, i.e. une ligne dans laquelle des données correspondant à la transaction en cours ont été copiées (écrites). Les lignes de cache associées à un état T sont verrouillées jusqu'à la fin de la transaction, en ce sens que leur contenu ne peut pas être supprimé et synchronisé avec la mémoire persistante pendant la transaction : il est seulement possible d'en modifier le contenu durant la transaction ;
- un état M, représentatif d'une allocation de la ligne de cache à des données externes à la transaction. En d'autres termes, une ligne de cache associée à un état M est une ligne de cache dans laquelle des données qui ne correspondent pas à la transaction en cours ont été copiées. Par exemple, une transaction peut être suspendue et des données externes peuvent être écrites dans des lignes de cache pendant la suspension de la transaction. Dans ce cas, les lignes de cache dans lesquelles les données ont été écrites sont associées à un état M. Les lignes de cache associées à un état M peuvent aussi correspondre à des lignes de cache qui ont été allouées à une transaction précédente, comme détaillé ci-après ;
- un état C, indiquant que le contenu de la ligne de cache n'a pas été modifié ou déjà synchronisé (le contenu peut avoir été modifié avant, mais avoir été déjà synchronisé avec la mémoire persistante). Par exemple, une ligne de cache associée à un état C peut être une ligne de cache à laquelle le processeur a accédé en lecture simple, sans modification. Cet état correspond à un état « propre », par opposition à un état dit « sale » (« dirty » en anglais) qui désigne classiquement une ligne de cache dont le contenu a été modifié depuis qu'elle a été lue depuis la mémoire persistante, i.e. une ligne dans laquelle le processeur a écrit des données et dont le contenu n'a pas été synchronisé avec la mémoire persistante.

D'autres états peuvent être créés, notamment un état supplémentaire correspondant à une ligne vide, c'est-à-dire non présente dans le cache (état V). En d'autres termes, une ligne de cache associée à un état V est une ligne dans laquelle aucune donnée n'a été copiée.

Des lignes de cache des différents états peuvent cohabiter dans le cache, et les états peuvent être mis à jour à chaque nouvelle opération. L'association d'une ligne de cache à un état peut être effectuée par un gestionnaire de cache, par exemple via un système de marquage : dès qu'une ligne est copiée dans le cache, un marquage correspondant à l'état de la ligne (M, T, C, V) est mémorisé. Bien entendu, les noms donnés aux états des lignes de cache (M, T, C, V) n'ont aucune signification technique et les états peuvent être appelés autrement.

Toujours selon un mode de réalisation particulier et comme illustré sur la figure 1, des actions de trois types peuvent être réalisées lors de l'exécution d'une instruction d'écriture de données en cache :
- modifier (étape 102) le contenu d'une ligne de cache associée à un état T (ou plus simplement « ligne T »), c'est-à-dire une ligne déjà modifiée dans le cadre de la transaction - par exemple une ligne dans laquelle des données ont été copiées lors d'une précédente instruction ;
- écrire (étape 103) des données dans une ligne C ;
- écrire (étape 104) des données dans une nouvelle ligne de cache.

Dans le cas d'une modification 102 du contenu d'une ligne T ou d'une écriture 103 sur une ligne C, le contenu de ces lignes peut être directement mis à jour (étape 105) avec les données correspondant à l'instruction en cours. La ligne de cache mise à jour est ensuite associée (étape 106), le cas échéant, à un état T (dans le cas d'une modification 102 du contenu d'une ligne T, cette étape est bien entendu inutile).

Dans le cas d'une écriture 104 de données sur une nouvelle ligne de cache, il est tout d'abord vérifié (étape 108) s'il y a au moins une ligne de cache disponible - en d'autres termes, s'il existe au moins une ligne V ou C. S'il y a suffisamment de lignes de cache disponibles pour effectuer l'écriture des données (flèche « Y » de l'étape 108), le contenu de cette(ces) ligne(s) vide(s) peut être directement mis à jour 105 à partir des données, et la(les) ligne(s) est(sont) ensuite associée(s) à un état T (étape 106) comme précédemment.

S'il n'y a pas (ou pas suffisamment) de ligne de cache disponible pour effectuer l'écriture des données (flèche « N » de l'étape 108), une purge est effectuée (étape 109) pour tout ou partie des lignes M. Le contenu de ces lignes M est donc copié vers la mémoire persistante (synchronisation) et le contenu de ces lignes est supprimé. Les lignes sont alors associées (étape 110) à un état C. Les données correspondant à l'instruction en cours peuvent alors être copiées (étape 105) dans ces lignes nouvellement disponibles. Les lignes dans lesquelles des données ont été copiées sont ensuite associées à un état T (étape 106).

Ainsi, une purge n'est effectuée que s'il est nécessaire de copier des données vers une nouvelle ligne de cache et s'il n'y a plus de ligne disponible. Ainsi, pour des transactions qui nécessitent assez peu d'écriture de données sur de nouvelles lignes, une purge partielle de la mémoire cache vers la mémoire persistante est suffisante ; et si l'espace disponible sur la mémoire cache en début de transaction est suffisant, il n'est même pas nécessaire d'effectuer la moindre purge.

Les étapes précédentes sont répétées jusqu'à la dernière instruction de la transaction (étape 107 de la figure 1, dans laquelle il est testé s'il reste des instructions à exécuter). Sauf dans le cas d'une coupure d'alimentation (où la séquence d'instruction est interrompue et toutes les lignes vidées), la dernière instruction exécutée correspond à une validation ou une annulation. A l'étape 111, il est vérifié laquelle de ces instructions (validation ou annulation) est reçue. S'il s'agit d'une instruction de validation (flèche « Y » de l'étape 111), , l'état des lignes T est modifié et ces lignes sont associées à un état M (étape 113).

Dans le cas d'une instruction d'annulation (flèche « N » de l'étape 111), les lignes T sont invalidées : leur contenu est vidé (étape 112) et les lignes concernées deviennent non présentes - ces lignes sont alors associées à un état V. En revanche, le contenu des lignes M est conservé.

Le procédé décrit ci-dessus en référence à la Figure 1 est avantageux car il évite une purge systématique des lignes de cache en début de transaction. En outre, il n'est pas nécessaire de stocker de manière persistante des données avant modification, contrairement aux méthodes classiques.

En outre, certaines transactions sont validées de manière certaine et ne peuvent être annulées (sauf en cas de coupure d'alimentation, auquel cas toutes les lignes sont purgées et deviennent des lignes C). Pour ces transactions, il est intéressant d'autoriser des transitions directes de l'état M vers l'état T, autrement dit de permettre l'écriture des données correspondant à la transaction directement dans des lignes M.

Ainsi, selon un deuxième mode de réalisation mis en oeuvre dans le cadre de transactions sans annulation, quatre types d'action peuvent être effectuées dans le cadre d'une instruction :
- modifier le contenu d'une ligne T ;
- modifier le contenu d'une ligne M ;
- écrire des données dans une ligne C ;
- écrire des données dans une nouvelle ligne de cache.

Pour une modification du contenu d'une ligne T ou d'une écriture de données dans une ligne C, tout se passe comme dans le mode de réalisation précédent. Dans le cas d'une modification du contenu d'une ligne M, il suffit de mettre à jour l'état de cette ligne pour l'associer à un état T une fois que le contenu de la ligne a été modifié. Pour l'écriture de données sur une nouvelle ligne, il est vérifié, comme dans le mode de réalisation précédent (étape 108), s'il y a suffisamment de lignes de cache disponibles pour effectuer l'écriture des données. Comme mentionné précédemment, il n'est considéré ici que des transactions nécessitant au plus N lignes de cache, N étant le nombre maximal de lignes de cache physiquement disponibles dans le cache. Ainsi, physiquement, le cache est dimensionné pour que la transaction puisse être effectuée. S'il n'y a pas suffisamment de lignes de cache disponibles, il est possible de purger les lignes M non allouées à la transaction.

Dans ce deuxième mode de réalisation, les lignes M correspondant à des données de la transaction à modifier peuvent être directement modifiées et associées à un état T, sans qu'il ne soit nécessaire de les purger préalablement. Ainsi, le nombre de purge à effectuer sur des lignes M est considérablement réduit. En effet, une telle purge n'est réalisée que lorsque le cache est plein, et qu'il y a des lignes M qui ne correspondent pas à des données de la transaction à modifier.

Le fait qu'une transaction peut ou non être annulée peut être indiquée par l'interface de programmation d'application, ou API (de l'anglais « application programming interface »), par exemple à l'aide d'un marquage. Ainsi, l'API indique quel type de transaction doit être effectuée (avec ou sans annulation possible) et à partir de cette indication, la modification du contenu de lignes M et le passage direct d'un état M à un état T pour une ligne peuvent être autorisés ou non. Ainsi, selon un mode de réalisation de l'invention, le mécanisme de cache peut être exécuté selon l'un ou l'autre des deux modes de réalisation précédents selon le type de transaction à exécuter, ce type pouvant être indiqué par l'API.

Dans tous les modes de réalisation, il est à noter qu'aucune purge de l'ensemble des lignes de cache n'est effectuée à la fin d'une transaction.

L'invention et ses différents modes de réalisation sont particulièrement avantageux car ils évitent une purge systématique du cache en début et/ou en fin de transaction. Le système gagne alors en rapidité, les composants sont moins soumis à l'usure, et la consommation d'énergie est réduite. Dans le cadre d'un chargement de profil sur une carte eSIM (opération nécessitant un grand nombre de transactions) selon le premier mode de réalisation, il a par exemple été constaté une réduction de 30% du temps de chargement. Selon le deuxième mode de réalisation, cette réduction du temps d'exécution peut monter jusqu'à 50%.

Le nombre de lignes de cache étant physiquement limité, il est difficile de prévoir à l'avance si ce nombre est suffisant pour prendre en charge la transaction et les valeurs déjà mises à jour. L'invention contourne cette difficulté en modifiant le modèle à la volée lors de l'exécution de la transaction. Ainsi, la transaction est exécutée sans purger le cache au début de la transaction, et seulement lorsque le cache est complet, tout ou partie des lignes M sont purgées afin de récupérer des entrées propres et réutilisables pour la transaction en cours.

La figure 2 représente des transitions possibles pour les états associés à des lignes de cache, selon plusieurs modes de réalisation de l'invention. En particulier, la figure 2 montre les quatre états définis précédemment : M (élément 204), T (élément 203), C (élément 201) et V (élément 202).

Sur la figure 2, les flèches en traits pleins correspondent aux transitions communes aux deux modes de réalisation, la flèche en pointillés ornée de carrés correspond à une transition propre au premier mode de réalisation présenté ci-dessus, et la flèche en trait discontinu représente une transition propre au deuxième mode de réalisation ci-dessus.

Comme représenté en figure 2, dans tous les modes de réalisation, quand une ligne est dans un état V (202), elle peut :
- passer dans un état C (201), lorsque le processeur tente de lire des données dans le cache, mais que les données ne sont pas présentes (défaut de cache en lecture) ; ou
- passer dans un état M (204), lorsque le processeur tente d'écrire des données dans le cache, mais que les données ne sont pas présentes (défaut de cache en écriture) ; ou
- passer dans un état T (203), lors d'un défaut de cache en écriture lors de la mise à jour du contenu de la ligne, après initialisation de la transaction.

En outre, quand une ligne est dans un état M (204), elle peut :
- rester dans le même état, en cas d'écriture de données externes à la transaction ; ou
- passer dans un état C (201) lorsque cette ligne est purgée pour y écrire par la suite des données de transaction (étape 109 de la figure 1).

Quand une ligne est dans un état C (201), elle peut :
- rester dans le même état, en cas de lecture simple de données de cette ligne ; ou
- passer dans un état T (203), en cas d'écriture de données après initialisation de la transaction ; ou
- passer dans un état M (204), en cas d'écriture de données externes à la transaction.

Enfin, quand une ligne est dans un état T (203), elle peut :
- rester dans le même état, en cas de modification ou lecture de son contenu ; ou
- passer dans un état M (204), lorsque la transaction est validée ; ou
- passer dans un état V (202), lorsque la transaction est annulée.

Dans le premier mode de réalisation, dans lequel la transaction peut être annulée, une ligne dans un état T (203) peut passer en outre dans un état V (202) lorsque la transaction est annulée.

Dans le deuxième mode de réalisation, dans lequel la transaction ne peut pas être annulée, une transition directe de M (204) vers T (203) est autorisée.

La figure 3 représente un dispositif pour exécuter une transaction selon un mode de réalisation de l'invention.

Dans ce mode de réalisation, le dispositif 300 comprend une mémoire 301 pour stocker des instructions permettant la mise en oeuvre du procédé, et des données temporaires pour réaliser les différentes étapes du procédé tel que décrit précédemment.

Le dispositif comporte en outre un circuit 304. Ce circuit peut être, par exemple :
- un processeur apte à interpréter des instructions sous la forme de programme informatique, ou
- une carte électronique dont les étapes du procédé de l'invention sont décrites dans le silicium, ou
- une puce électronique programmable comme une puce FPGA (pour « Field-Programmable Gate Array » en anglais), comme un SOC (pour « System On Chip » en anglais) ou comme un ASIC (pour « Application Specific Integrated Circuit » en anglais).

Les SOC ou système sur puce sont des systèmes embarqués qui intègrent tous les composants d'un système électronique dans une puce unique. Un ASIC est un circuit électronique spécialisé qui regroupe des fonctionnalités sur mesure pour une application donnée. Les ASIC sont généralement configurés lors de leur fabrication et ne peuvent être que simulés par l'utilisateur. Les circuits logiques programmables de type FPGA sont des circuits électroniques reconfigurables par l'utilisateur.

Le circuit 304 comprend une mémoire cache 302. Dans certains modes de réalisation, le circuit 304 peut contenir plusieurs caches, associés à plusieurs niveaux.

Le dispositif 300 peut en outre comporter une interface d'entrée 303 pour recevoir une commande correspondant à une ou plusieurs transactions (par exemple une commande de chargement de profil ou une commande de paiement). Enfin, le dispositif 300 peut comporter, pour permettre une interaction aisée avec un utilisateur, un écran et un clavier (non représentés). Bien entendu, le clavier est facultatif, notamment dans le cadre d'un ordinateur ayant la forme d'une tablette tactile ou d'un mobile multifonctions (ou « smartphone » en anglais), par exemple.

En fonction du mode de réalisation, le dispositif 300 peut être un ordinateur, un réseau d'ordinateurs, un composant électronique, ou un autre appareil comportant un processeur couplé de manière opérationnelle à une mémoire, ainsi que, selon le mode de réalisation choisi, une unité de stockage de données, et d'autres éléments matériels associés comme une interface de réseau et un lecteur de support pour lire un support de stockage amovible et écrire sur un tel support (non représentés sur la figure). Le support de stockage amovible peut être, par exemple, un disque compact (CD), un disque vidéo/polyvalent numérique (DVD), un disque flash, une clé USB, etc.

En fonction du mode de réalisation, la mémoire, l'unité de stockage de données ou le support de stockage amovible contient des instructions qui, lorsqu'elles sont exécutées par le circuit de commande 304, amènent ce circuit de commande 304 à effectuer ou contrôler les parties interface d'entrée 303, stockage de données dans la mémoire 301 et/ou traitement de données des exemples de mise en oeuvre du procédé proposé.

Le circuit de commande 304 peut être un composant implémentant le contrôle des unités 303 et 301 du dispositif 300.

Par ailleurs, le schéma fonctionnel présenté sur la figure 1 est un exemple typique d'un programme dont certaines instructions peuvent être réalisées auprès du dispositif 300. A ce titre, la figure 1 peut correspondre à l'organigramme de l'algorithme général d'un programme informatique au sens de l'invention.

Bien entendu, la présente invention ne se limite pas aux formes de réalisation décrites ci-avant à titre d'exemples. Elle s'étend à d'autres variantes. Dans les revendications, le terme « comporter » n'exclut pas d'autres éléments ou d'autres étapes. Les différentes caractéristiques présentées et/ou revendiquées peuvent être avantageusement combinées. Leur présence dans la description ou dans des revendications dépendantes différentes n'exclut pas, en effet, la possibilité de les combiner. Les signes de référence ne sauraient être compris comme limitant la portée de l'invention.

## Revendications

1. Procédé mis en oeuvre par un processeur pour exécuter une transaction sans annulation possible, ladite transaction comprenant une séquence d'instructions, le processeur étant associé à une mémoire persistante et à une mémoire cache, dans lequel la mémoire cache comprend une pluralité de lignes de cache et chaque ligne de cache est associée à un état respectif parmi un ensemble d'états prédéfinis, le procédé comprenant, pour au moins une instruction de la séquence d'instructions nécessitant de copier des données vers au moins une ligne de cache associée à un état autre qu'un état (203) représentatif d'une allocation à des données de ladite transaction :
a. si au moins une ligne de cache est associée à un état permettant de copier directement des données dans ladite au moins une ligne de cache :
i. copier (105) des données correspondant à ladite instruction dans ladite au moins une ligne de cache ; et
ii. associer (106) ladite au moins une ligne de cache à un état (203) représentatif d'une allocation à des données de ladite transaction ;
b. si aucune ligne de cache n'est associée à un état permettant de copier directement des données :
i. copier (105) des données correspondant à ladite instruction dans au moins une ligne de cache parmi un ensemble de lignes de cache associées à un état (204) représentatif d'une allocation à des données externes à ladite transaction ; et
ii. associer (106) ladite au moins une ligne de cache à un état (203) représentatif d'une allocation à des données de ladite transaction.

2. Procédé selon la revendication 1, dans lequel, si aucune ligne de cache n'est associée à un état permettant de copier directement des données, ledit ensemble comprend toutes les lignes de cache associées à un état (204) représentatif d'une allocation à des données externes à ladite transaction.

3. Procédé selon l'une des revendications précédentes, dans lequel des contenus respectifs des lignes de cache associées à l'état (203) représentatif d'une allocation à des données de ladite transaction ne peuvent pas être supprimés pendant l'exécution de ladite transaction.

4. Procédé selon l'une des revendications précédentes, comprenant en outre :
- recevoir (101) une commande d'initialisation de la transaction ;
- en réponse à la réception de la commande d'initialisation, conserver un contenu courant de la mémoire cache ; et
- exécuter (103, 104) une première instruction de la séquence d'instructions selon l'étape a ou b, l'exécution de la première instruction comprenant une modification du contenu courant de la mémoire cache à partir de données correspondant à la première instruction.

5. Procédé selon la revendication 4, comprenant en outre :
- recevoir une information indiquant que la commande d'initialisation reçue correspond à une transaction sans annulation possible.

6. Procédé selon la revendication 6, comprenant en outre :
- recevoir une instruction de validation de ladite transaction ;
- en réponse à la réception de l'instruction de validation de ladite transaction, modifier (113) les états des lignes de cache associées à l'état (203) représentatif d'une allocation à des données de ladite transaction, et les associer à l'état (204) représentatif d'une allocation à des données externes à ladite transaction.

7. Produit programme informatique comportant des instructions pour la mise en oeuvre de chacune des étapes du procédé selon l'une des revendications 1 à 6, lorsque ce programme est exécuté par un processeur.

8. Dispositif (300) pour exécuter une transaction sans annulation possible, ladite transaction comprenant une séquence d'instructions, le dispositif étant associé à une mémoire persistante et à une mémoire cache, dans lequel la mémoire cache comprend une pluralité de lignes de cache et chaque ligne de cache est associé à un état respectif parmi un ensemble d'états prédéfinis, le dispositif comprenant un circuit configuré pour :
- pour au moins une instruction de la séquence d'instructions nécessitant de copier des données vers au moins une ligne de cache associée à un état autre qu'un état (203) représentatif d'une allocation à des données de ladite transaction :
a. si au moins une ligne de cache est associée à un état permettant de copier directement des données dans ladite au moins une ligne de cache :
i. copier (105) des données correspondant à ladite instruction dans ladite au moins une ligne de cache ; et
ii. associer (106) ladite au moins une ligne de cache à un état (203) représentatif d'une allocation à des données de ladite transaction ;
b. si aucune ligne de cache n'est associée à un état permettant de copier directement des données :
i. copier (105) des données correspondant à ladite instruction dans au moins une ligne de cache parmi un ensemble de lignes de cache associées à un état (204) représentatif d'une allocation à des données externes à ladite transaction ; et
ii. associer (106) ladite au moins une ligne de cache à un état (203) représentatif d'une allocation à des données de ladite transaction.

## Patentansprüche

1. Verfahren, durchgeführt von einem Prozessor, um eine Transaktion ohne Abbruchmöglichkeit auszuführen, wobei die Transaktion eine Folge von Anweisungen enthält, wobei der Prozessor mit einem persistenten Speicher und mit einem Cache-Speicher verbunden ist, wobei der Cache-Speicher eine Vielzahl von Cache-Zeilen enthält und jede Cache-Zeile mit einem Zustand aus einer Gruppe von vordefinierten Zuständen verbunden ist, wobei das Verfahren für mindestens eine Anweisung der Folge von Anweisungen, die das Kopieren von Daten zu mindestens einer Cache-Zeile erfordert, die mit einem anderen Zustand als einem für eine Zuordnung zu Daten der Transaktion repräsentativen Zustand (203) verbunden ist, enthält:
a. wenn mindestens eine Cache-Zeile mit einem Zustand verbunden ist, der es ermöglicht, Daten direkt in die mindestens eine Cache-Zeile zu kopieren:
i. der Anweisung entsprechende Daten in die mindestens eine Cache-Zeile zu kopieren (105); und
ii. die mindestens eine Cache-Zeile mit einem Zustand (203) zu verbinden (106), der für eine Zuordnung zu Daten der Transaktion repräsentativ ist;
b. wenn keine Cache-Zeile mit einem Zustand verbunden ist, der es ermöglicht, Daten direkt zu kopieren:
i. der Anweisung entsprechende Daten in mindestens eine Cache-Zeile aus einer Gruppe von Cache-Zeilen zu kopieren (105), die mit einem Zustand (204) verbunden sind, der für eine Zuordnung zu Daten außerhalb der Transaktion repräsentativ ist; und
ii. die mindestens eine Cache-Zeile mit einem Zustand (203) zu verbinden (106), der für eine Zuordnung zu Daten der Transaktion repräsentativ ist.

2. Verfahren nach Anspruch 1, wobei, wenn keine Cache-Zeile mit einem Zustand verbunden ist, der es ermöglicht, Daten direkt zu kopieren, die Gruppe alle Cache-Zeilen enthält, die mit einem Zustand (204) verbunden sind, der für eine Zuordnung zu Daten außerhalb der Transaktion repräsentativ ist.

3. Verfahren nach einem der vorhergehenden Ansprüche, wobei Inhalte der Cache-Zeilen, die mit dem Zustand (203) verbunden sind, der für eine Zuordnung zu Daten der Transaktion repräsentativ ist, während der Ausführung der Transaktion nicht gelöscht werden können.

4. Verfahren nach einem der vorhergehenden Ansprüche, das außerdem enthält:
- Empfang (101) eines Initialisierungsbefehls der Transaktion;
- als Antwort auf den Empfang des Initialisierungsbefehls, Aufbewahren eines aktuellen Inhalts des Cache-Speichers; und
- Ausführen (103, 104) einer ersten Anweisung der Folge von Anweisungen gemäß Schritt a oder b, wobei die Ausführung der ersten Anweisung eine Änderung des aktuellen Inhalts des Cache-Speichers ausgehend von der ersten Anweisung entsprechenden Daten enthält.

5. Verfahren nach Anspruch 4, das außerdem enthält:
- Empfang einer Information, die anzeigt, dass der empfangene Initialisierungsbefehl einer Transaktion ohne Abbruchmöglichkeit entspricht.

6. Verfahren nach Anspruch 6, das außerdem enthält:
- Empfang einer Validierungsanweisung der Transaktion;
- als Antwort auf den Empfang der Validierungsanweisung der Transaktion, Ändern (113) der Zustände der mit dem für eine Zuordnung zu Daten der Transaktion repräsentativen Zustand (203) verbundenen Cache-Zeilen, und ihre Verbindung mit dem für eine Zuordnung zu Daten außerhalb der Transaktion repräsentativen Zustand (204).

7. EDV-Programmprodukt, das Anweisungen für die Durchführung jedes der Schritte des Verfahrens nach einem der Ansprüche 1 bis 6 aufweist, wenn das Programm von einem Prozessor ausgeführt wird.

8. Vorrichtung (300) zur Ausführung einer Transaktion ohne Abbruchmöglichkeit, wobei die Transaktion eine Folge von Anweisungen enthält, wobei die Vorrichtung mit einem persistenten Speicher und mit einem Cache-Speicher verbunden ist, wobei der Cache-Speicher eine Vielzahl von Cache-Zeilen enthält und jede Cache-Zeile mit einem Zustand aus einer Gruppe von vordefinierten Zuständen verbunden ist, wobei die Vorrichtung eine Schaltung enthält, die konfiguriert ist, um:
- für mindestens eine Anweisung der Folge von Anweisungen, die das Kopieren von Daten zu mindestens einer Cache-Zeile erfordert, die mit einem anderen Zustand als einem für eine Zuordnung zu Daten der Transaktion repräsentativen Zustand (203) verbunden ist:
a. wenn mindestens eine Cache-Zeile mit einem Zustand verbunden ist, der es ermöglicht, Daten direkt in die mindestens eine Cache-Zeile zu kopieren:
i. der Anweisung entsprechende Daten in die mindestens eine Cache-Zeile zu kopieren (105); und
ii. die mindestens eine Cache-Zeile mit einem Zustand (203) zu verbinden (106), der für eine Zuordnung zu Daten der Transaktion repräsentativ ist;
b. wenn keine Cache-Zeile mit einem Zustand verbunden ist, der es ermöglicht, Daten direkt zu kopieren:
i. der Anweisung entsprechende Daten in mindestens eine Cache-Zeile aus einer Vielzahl von Cache-Zeilen zu kopieren (105), die mit einem Zustand (204) verbunden sind, der für eine Zuordnung zu Daten außerhalb der Transaktion repräsentativ ist; und
ii. die mindestens eine Cache-Zeile mit einem Zustand (203) zu verbinden (106), der für eine Zuordnung zu Daten der Transaktion repräsentativ ist.

## Claims

1. Method implemented by a processor to execute a non-abortable transaction, said transaction comprising a sequence of instructions, the processor being associated with a persistent memory and with a cache memory, wherein the cache memory comprises a plurality of cache lines and each cache line is associated with a respective state from a set of predefined states, the method comprising, for at least one instruction of the sequence of instructions requiring data to be copied to at least one cache line associated with a state other than a state (203) representative of an allocation to data of said transaction:
a. if at least one cache line is associated with a state enabling data to be copied directly into said at least one cache line:
i. copying (105) data corresponding to said instruction into said at least one cache line; and
ii. associating (106) said at least one cache line with a state (203) representative of an allocation to data of said transaction;
b. if no cache line is associated with a state enabling data to be copied directly:
i. copying (105) data corresponding to said instruction into at least one cache line from a set of cache lines associated with a state (204) representative of an allocation to data outside said transaction; and
ii. associating (106) said at least one cache line with a state (203) representative of an allocation to data of said transaction.

2. Method according to Claim 1, wherein, if no cache line is associated with a state enabling data to be copied directly, said set comprises all of the cache lines associated with a state (204) representative of an allocation to data outside said transaction.

3. Method according to one of the preceding claims, wherein respective content of the cache lines associated with the state (203) representative of an allocation to data of said transaction cannot be deleted during execution of said transaction.

4. Method according to one of the preceding claims, further comprising:
- receiving (101) an initialization command for the transaction;
- in response to receipt of the initialization command, conserving a current content of the cache memory; and
- executing (103, 104) a first instruction of the sequence of instructions according to step (a) or (b), the execution of the first instruction comprising a modification of the current content of the cache memory using data corresponding to the first instruction.

5. Method according to Claim 4, further comprising:
- receiving an information item indicating that the initialization command received corresponds to a non-abortable transaction.

6. Method according to Claim 6, further comprising:
- receiving a commit instruction for said transaction;
- in response to receipt of the commit instruction for said transaction, modifying (113) the states of the cache lines associated with the state (203) representative of an allocation to data of said transaction, and associating them with the state (204) representative of an allocation to data outside said transaction.

7. Computer program product including instructions for implementing each of the steps of the method according to one of Claims 1 to 6, when this program is executed by a processor.

8. Device (300) for executing a non-abortable transaction, said transaction comprising a sequence of instructions, the device being associated with a persistent memory and with a cache memory, wherein the cache memory comprises a plurality of cache lines and each cache line is associated with a respective state from a set of predefined states, the device comprising a circuit configured to:
- for at least one instruction of the sequence of instructions requiring data to be copied to at least one cache line associated with a state other than a state (203) representative of an allocation to data of said transaction:
a. if at least one cache line is associated with a state enabling data to be copied directly into said at least one cache line:
i. copy (105) data corresponding to said instruction into said at least one cache line; and
ii. associate (106) said at least one cache line with a state (203) representative of an allocation to data of said transaction;
b. if no cache line is associated with a state enabling data to be copied directly:
i. copy (105) data corresponding to said instruction into at least one cache line from a set of cache lines associated with a state (204) representative of an allocation to data outside said transaction; and
ii. associate (106) said at least one cache line with a state (203) representative of an allocation to data of said transaction.
